**Europäisches Patentamt**

**European Patent Office**

**Office européen des brevets**

(19)

(11) Publication number: **0 112 068**
**B1**

(12) **EUROPEAN PATENT SPECIFICATION**

(45) Date of publication of patent specification: **21.01.87**

(51) Int. Cl.⁴: **H 01 M 4/66, H 01 M 10/36**

(21) Application number: **83307073.3**

(22) Date of filing: **18.11.83**

(54) Electrically conductive plastic electrode having a porous surface.

(30) Priority: **24.11.82 JP 204460/82**

(43) Date of publication of application:
**27.06.84 Bulletin 84/26**

(45) Publication of the grant of the patent:
**21.01.87 Bulletin 87/04**

(84) Designated Contracting States:
**AT DE FR GB IT**

(56) References cited:
**US-A-3 719 526**
**US-A-3 772 085**
**US-A-3 811 945**
**US-A-4 064 207**
**US-A-4 104 197**
**US-A-4 104 447**

**JOURNAL OF THE CHEMICAL SOCIETY, vol.
129, no. 9, September 1982, pages 1993-1997,
Manchester, New Hampshire, USA. K.
KINOSHITA et al.: "Mass-transfer study of
carbon felt, flow-through electrode"**

(73) Proprietor: **Kabushiki Kaisha Meidensha
1-17, Ohsaki 2-chome
Shinagawa-ku Tokyo 141 (JP)**

(72) Inventor: **Hirota, Akihiko
Lion's Mansion-1 1-33-17 Kamiuma
Setagaya-ku Tokyo (JP)**
Inventor: **Fujii, Toshinobu
4-20-12 Hinodai Hino-shi
Tokyo (JP)**

(74) Representative: **Burnside, Michael et al
Michael Burnside & Partners 2 Serjeants' Inn
Fleet Street
London EC4Y 1HL (GB)**

Courier Press, Leamington Spa, England.

**Description**

This invention relates to an electrically conductive carbon plastics electrode having a porous surface used as a bromine side electrode of a zinc-bromine secondary cell stack battery on the surface of which a layer of electrically conductive porous material is formed for improving and maintaining the energy efficiency of the electrochemical reaction of bromine in the cell.

The electrode in an electric cell stack battery is required in order to provide a site for the electrochemical reaction and stably prosecute the reaction in the cell. The electrodes so far used for this purpose for zinc-bromine secondary cell stack batteries may be classified into metallic electrodes made of metallic material, carbon electrodes made of carbon itself, and electrically conductive plastics electrodes made from a plastics material mixed and blended with an electrically conducting material, such as carbon powder, to impart electrical conductivity to the resulting electrode.

The metallic material for the metallic electrode is limited to noble metals, such as platinum, in view of the corrosive action of molecular bromine which is produced during charging of the cell. The noble metals are usually rather low in electric resistance and have excellent coulomb efficiency, while also providing an acceptable voltage efficiency during a discharge period and a prolonged useful discharge time. However, the noble metals are expensive and thus are not practically used as electrode materials.

Carbon electrodes are less costly than the noble metals, and hence are used in a wide variety of sizes, from dry cell electrodes to electrodes for plant-size electrochemical reactions. However, these carbon electrodes are generally poor in operational reliability because they are extremely low in mechanical strength and tend to crack under the effect of mechanical impact. Moreover, carbon electrodes are generally porous and thus are not usable in a cell stack bipolar battery system in which the electrode itself is designed to play the role of a partition plate.

As to the use of electrically conductive plastics electrodes as bromine side electrodes, one must accept the consequence of lower voltage and coulomb efficiency, in view of higher electric resistance and lower reactivity with bromine, although they are fairly sufficient in mechanical strength.

One of the present inventors has devised a bromine side electrode material which is higher in energy efficiency and free from the above inconvenience of the prior-art electrically conductive plastic electrode (JP—A—57—119463). However, the electrode material proposed in this elder application for bromine side electrodes is not completely sufficient to overcome the drawback as to long endurance, energy efficiency and costs. In short, there is not known so far in the art an electrode material that shows a proven quality when used in a bromine side electrode of a zinc-bromine secondary cell stack battery.

There is also known from US—A—3811945 a bipolar electrode for a cell stack battery with circulating aqueous zinc bromide electrolyte, said electrode comprising an impermeable electrically conducting membrane bonded by a thin layer of graphite cement to a layer of porous graphite felt. On the other side of the membrane to the felt a layer of zinc is deposited to form an anode.

As a result of repeated researches to develop a bromine side electrode material that is durable and inexpensive and provides an improved energy efficiency, the present inventors have found that the voltage efficiency and the coulomb efficiency of the bromine side electrically conductive plastics electrode may be improved by providing a porous sheet of an electrically conductive material on the electrode surface, and also found that especially good results may be attained by using a specific pore size for the electrically conductive sheet material. The present invention is based on this finding.

Thus the present invention resides in an electrically conductive plastics electrode for a zinc-bromine secondary cell stack battery, comprising an electrode body of electrically conductive plastics material, with a porous sheet of electrically conducting material having a porosity higher than 2.0 volume % fixed to the surface of said electrode body, characterised in that the porous sheet is a fabric of carbon fibres having a pore size of from 3 to 700 nm.

The invention is described with reference to the accompanying Drawings, in which:

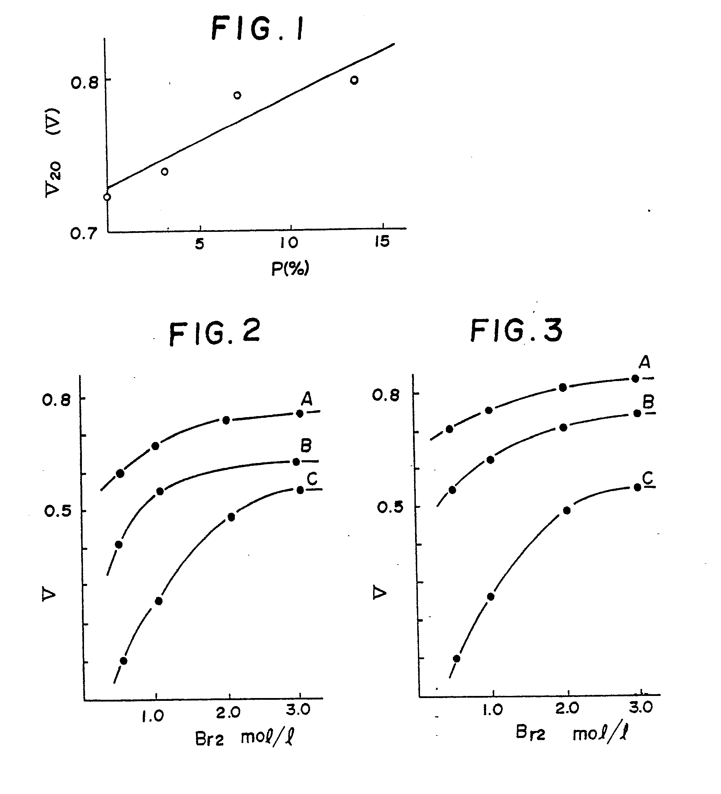

Figs. 1 to 3 are graphic charts showing the effects of an electrically conductive plastics electrode having a porous surface according to the present invention.

Polyolefin resins are preferred for use as base polymer for the electrode, because that material is not degraded on long contact with molecular or ionized bromine.

Typical of the polyolefin resins are polyethylene resins, polypropylene resins, chlorinated polyethylene resins and chlorinated polypropylene resins, these being used single or in combination as mixtures. Any other resin constituents that may be used in the electrically conductive plastics electrode composition may be added to the aforementioned polyolefin resins, for realizing desired electrode properties, insofar as these additional components do not detract from the properties usually required for the electrode material.

An electrically conductive plastics electrode may usually be prepared by heat press forming of a composition containing the electrically conductive materials and a base polymer of polyolefin resins selected from the aforementioned resins. When polyethylene resin is used as base polymer, by way of example, 50 weight parts of carbon black are mixed with 100 weight parts of high density polyethylene (with density, higher than 0.94 g/cm$^3$) to form an electrode compound which is then formed in a press heated at approximately 180 to 200°C, to form the ultimate electrically conductive plastics electrode.

The electrically conductive material provided as a sheet on the electrically conductive electrode surface, in accordance with the present invention, is a felted, knitted or woven fabric of electrically

2

conductive carbon fibres having numerous small pores. The carbon fibres are usually made from a polyacrylic fibre or pitch fibre.

Carbon fibres *per se* are in the form of fibres, but in view of formability, they are preferably in the form of a sheet when formed as layer on the electrically conductive electrode surface.

The carbon fibre sheet employed in the present invention has a pore size in the range from 3 to 700 nm and a porosity higher than approximately 2.0%. The porosity P is defined by the following formula:

$$P = \frac{\text{total pore vol. (ml/g)} \times \text{sheet wt. (g/m}^2)}{\text{sheet thickness (m)}} \times 10^{-6} \times 100$$

As a result of our researches, it has been found that a linear relation exists between this porosity and the mean discharge electric potential.

By way of testing, several sheets of the electrically conductive carbon fibre, in the form of cloths having different values of porosity, were affixed by heat pressing to respective samples of the electrically conductive plastics electrodes. These porous-surface electrodes were immersed in an electrolyte containing 0.4 to 1.0 mole per litre of $Br_2$, corresponding to the values occurring before the expiration of discharge, and the mean electric potential of electrode $V_{20}$ at the bromine side in the course of the constant discharge current of 20 mA/cm$^2$ was measured by using Ag—AgCl as reference electrode. The results are tabulated as follows.

| Porosity P (%) | 0.0 | 3.2 | 7.2 | 13.7 |
|---|---|---|---|---|
| mean electric potential $V_{20}$ | 0.723 | 0.739 | 0.788 | 0.796 |

Fig. 1 shows a straight line adapted by the least square method from a curve obtained from the above Table. The relation between the two variables P and $V_{20}$ is given by a formula

$$V_{20} = 5.7 \times 10^{-3} P + 0.73 \text{ (correlative coefficient r = 0.928)}$$

On the other hand, electrically conductive sheets in the form of knitted fabric and cloths were treated for affording a porosity of approximately 14% and the resulting sheets were affixed by heat pressing to the electrically conductive plastics electrode test pieces to the electrically conductive plastics electrode having a porous surface (sample A). Similarly, electrically conductive carbon fibre sheet which had not undergone the porosity-producing treatment were affixed by heat pressing to other electrically conductive plastics test pieces to the electrically conductive plastics electrode having a nonporous surface (sample B). The electrically conductive plastics electrode (sample C) was not treated in this manner. The discharge electric potential characteristics of the respective samples A, B, C were measured at room temperature, with use of an electrolyte of 3 moles per litre of $ZnBr_2$ + $Br_2$ and at the current density of 40 mA/cm$^2$. The results are shown in Figs. 2 and 3 for knitted fabric and cloths respectively. These test results are indicative of the excellent properties of the inventive electrode A.

In a further test, a zinc-bromine secondary cell with current density of 40 mA/cm$^2$, charging state of 80%, and an electrode-to-electrode distance equal to 2 mm. was used as a test cell in which a conventional electrically conductive plastics electrode C was used as negative electrode (zinc side electrode), and the inventive electrode A provided with a porous electrically conductive layer with porosity of 14%, the electrode B with affixed non-porous electrically conductive carbon fibre sheet, and the conventional electrically conductive plastics electrode C were alternatively used as positive electrodes (bromine side electrodes), and the energy efficiency was measured for the respective anodes. It was found that the efficiency was 72% for electrode A, 64% for electrode B, and 56% for electrode C.

From the foregoing it is apparent that the arrangement of the present invention enables the electric resistance of electrode to be reduced and the reaction area to be increased through the use of the electrically conductive porous sheets with variable pososity levels, whereby the energy efficiency of the cell may be improved.

The electrode surface. may become homogeneous due to pressure heat bonding of the electrically conductive porous sheet on the electrically conductive electrode, thus reducing fluctuations in electrode characteristics.

An adhesive layer may optionally be provided when providing the electrically conductive porous sheet on the surface of the electrically conductive plastics electrode. The adhesive need have at least some affinity with both the plastics electrode material and the electrically conductive sheet. In general, one may use a dispersion of small particles of silver or electrically conductive carbon in a liquid thermoplastic resin, such as polyolefin resin.

The electrically conductive plastics electrode having a porous surface obtained in the manner described in the foregoing may be used not only in a zinc-bromine secondary cell for improving and maintaining the energy efficiency of the electrochemical reaction, but as an electrode for a bipolar type cell stack secondary battery.

3

**Claims**

1. An electrically conductive plastics electrode for a zinc-bromine secondary cell stack battery, comprising an electrode body of electrically conductive plastics material, with a porous sheet of electrically conducting material having a porosity higher than 2.0 volume %, fixed to the surface of said electrode body, characterised in that the porous sheet is a fabric of carbon fibres having a pore size of from 3 to 700 nm.

2. An electrode according to Claim 1 characterised in that the porous sheet is fixed to the surface of the electrode body by means of a bromine-durable adhesive layer.

**Patentansprüche**

1. Elektrisch leitende Kunststoffelektrode für das Zink/Brom-Sekundärelement einer Stapelbatterie, die einen Elektrodenkörper aus einem elektrisch leitenden Kunststoff enthält, wobei eine poröse Folie eines elektrisch leitenden Materials mit einer Porosität größer als 2,0 Volumsprozenten auf der Oberfläche des Elektrodenkörpers befestigt wird, dadurch gekennzeichnet, daß die poröse Folie ein Aufbau aus Kohlenstoffasern ist, der eine Porengröße von 3 bis 700 nm besitzt.

2. Elektrode gemäß Anspruch 1, dadurch gekennzeichnet, daß die poröse Folie aus der Oberfläche des Elektrodenkörpers mit Hilfe einer brombeständigen Kleberschicht befestigt wird.

**Revendications**

1. Electrode en matière plastique, électriquement conductrice pour une batterie formée d'un empilage d'éléments accumulateurs au zinc-brome, comportant un corps d'électrode constitué en une matière plastique électriquement conductrice, avec une feuille poreuse formée d'un matériau électriquement conducteur et possédant une porosité supérieure à 2% en volume, fixée à la surface dudit corps d'électrode, caractérisée en ce que la feuille poreuse est un tissu formé de fibres de carbone et possédant des pores d'une taille comprise entre 3 et 700 nm.

2. Electrode selon la revendication 1, caractérisée en ce que la feuille poreuse est fixée à la surface du corps d'électrode au moyen d'une couche d'adhésif résistant au brome.

# FIG.1

# FIG.2

# FIG.3